# EUROPEAN PATENT SPECIFICATION

(11) **EP 4 180 861 B1**
(45) Date of publication and mention of the grant of the patent: **31.12.2025**
(21) Application number: 21852457.7
(22) Date of filing: 04.08.2021
(51) Int. Cl.: G02B 27/01

(54) **WEARABLE ELECTRONIC DEVICE**
TRAGBARE ELEKTRONISCHE VORRICHTUNG
DISPOSITIF ÉLECTRONIQUE POUVANT ÊTRE PORTÉ

(30) Priority: 04.08.2020 KR 20200097558
(43) Date of publication of application: 17.05.2023
(73) Proprietor: Samsung Electronics Co., Ltd., Suwon-si, Gyeonggi-do 16677 (KR)
(72) Inventor: WANG, Sangjin, Suwon-si, Gyeonggi-do 16677 (KR); KIM, Myungkyu, Suwon-si, Gyeonggi-do 16677 (KR); MOON, Woojung, Suwon-si, Gyeonggi-do 16677 (KR); BAE, Jonghyuk, Suwon-si, Gyeonggi-do 16677 (KR); WON, Jonghun, Suwon-si, Gyeonggi-do 16677 (KR); LEE, Dasom, Suwon-si, Gyeonggi-do 16677 (KR)
(74) Representative: HGF
(86) International application number: PCT/KR2021/010260
(87) International publication number: WO 2022/031027

(56) References cited:
- JP-A- 2011 221 129
- KR-A- 20110 090 815
- KR-A- 20160 002 190
- KR-A- 20190 110 492
- US-A1- 2020 204 787

## Description

### [Technical Field]

Various embodiments of the disclosure relate to electronic devices, and in particular to wearable electronic devices that may be put on a portion of a human body.

### [Background Art]

Portable electronic devices, such as electronic schedulers, portable multimedia players, mobile communication terminals, and tablet personal computers (PCs), are generally equipped with a display member and a battery, and may be limited in shape to a bar, clamshell, or slidable shape by their accompanying displays or batteries. As display members and batteries are made smaller and have enhanced performance, wearable electronic devices which may be worn on the user's wrist, head, or other body portions are becoming commercially available. Wearable electronic devices may be directly worn on the human body, presenting better portability and user accessibility.

Among wearable electronic devices, some electronic devices, e.g., head-mounted devices (HMDs), may be worn on a user's face. Such head-mounted devices may be utilized to implement virtual reality or augmented reality. For example, the wearable electronic device may stereoscopically provide the image of the virtual space in a game played on TV or computer monitor and may implement virtual reality by blocking a real-world image. Other types of wearable electronic devices may implement virtual images while providing an environment in which a real-world image of the space where a user is located may be visually perceived, thereby implementing augmented reality to provide various pieces of visual information to the user.

KR 20160002190 A discusses a glass type terminal which comprises a frame which can be worn on a head of a user, a display unit provided with the frame and providing visual information, a control module controlling the display, and a bridge coupled to the frame in the lengthwise direction of the frame, and coupled to a nose support unit which supports a nose of the user.

### [Detailed Description of the Invention]

### [Technical Problem]

Head-mounted wearable devices may include virtual reality (VR) glasses and augmented reality (AR) glasses which may have glasses-shaped frames and a display member fitted to the frames to process virtual objects.

AR glasses may provide various information about the space in which the user is staying or an object disposed in the space, depending on the user's gaze direction.

The AR glasses may obtain various information about the space or object from various sensors disposed on the front surface of the AR glasses. To accurately recognize the information about the space or object, the mutual positions of the sensors may be fixed.

For example, the sensors disposed on the front surface of the AR glasses may be positioned on the front frame of the glasses portion, and the sensors disposed on the frame may have their mutual positions fixed.

To fix the position of the sensors on the front surface of the AR glass, it is desirable to provide a frame with high rigidity to support the sensors disposed on the front surface of the AR glass. In this case, the rigidity-secured frame may not be flexible, causing inconvenience when the user wears the AR glasses.

According to various embodiments, there may be provided a structure for securing rigidity for the front surface of the wearable electronic device for precise recognition of the sensor on the front surface of the wearable electronic device.

According to various embodiments, there may be provided a moving structure of a hinge structure and a moving structure of a wearing member (e.g., glasses temples) of the wearable electronic device to address inconvenience to the user when wearing the wearable electronic device, due to the inflexibility caused by securing the rigidity of the front surface.

According to various embodiments, there may be provided an arrangement structure of internal components of the wearable electronic device to distribute weight while preventing force concentration at the center of gravity.

### [Technical Solution]

The scope of protection of the present invention is defined by the appended independent claim.

Optional features are specified by the dependent claims.

### [Advantageous Effects]

According to various embodiments of the disclosure, it is possible to secure the rigidity of the front surface of the wearable electronic device, thus increasing the accuracy of recognition of the sensor disposed on the front surface of the electronic device.

Further, according to various embodiments of the disclosure, it is possible to mitigate wearing inconvenience by providing a moving structure to the hinge structure and glasses temples of the wearable electronic device to address inconvenience to the user when wearing the wearable electronic device, due to the inflexibility caused by securing the rigidity of the front surface.

### [Brief Description of the Drawings]

FIG. 1 is a block diagram illustrating an electronic device in a network environment according to various embodiments of the disclosure;
FIG. 2 is a perspective view illustrating a wearable electronic device according to various embodiments of the disclosure;
FIG. 3 is a perspective view illustrating an internal configuration of a display member and a wearing member of a wearable electronic device according to various embodiments of the disclosure;
FIG. 4 is a cross-sectional view taken along direction A-A of FIG. 3;
FIG. 5 is an enlarged cross-sectional view of portion B of FIG. 4;
FIG. 6 is a view illustrating a rigidity securing structure of a wearable electronic device according to various embodiments of the disclosure;
FIG. 7A is a view illustrating an example in which a user wears a wearable electronic device;
FIG. 7B is a view illustrating an embodiment in which a wearing member of a wearable electronic device hits a user's face portion and an embodiment in which the wearing member of the wearable electronic device does not hit the user's face portion;
FIG. 8A is a view illustrating a wearing member before a user wears a wearable electronic device;
FIG. 8B is a view illustrating an example in which wearing members are opened in directions opposite to the direction toward a user's head with respect to a hinge structure when the user wears a wearable electronic device;
FIG. 8C is a view illustrating an example in which flexible portions of wearing members are opened in directions opposite to the direction toward a user's head when the user wears a wearable electronic device;
FIG. 9 is a view illustrating a rigid portion and a flexible portion of a wearing member according to various embodiments of the disclosure;
FIG. 10 is an enlarged view of a flexible portion of a wearing member according to various embodiments of the disclosure;
FIG. 11 is a perspective view illustrating a wearable electronic device including a hinge structure according to various embodiments of the disclosure;
FIG. 12 is a perspective view illustrating a hinge structure according to various embodiments of the disclosure; and
FIG. 13 is a cross-sectional view illustrating a hinge structure according to various embodiments of the disclosure.

### [Mode for Carrying out the Invention]

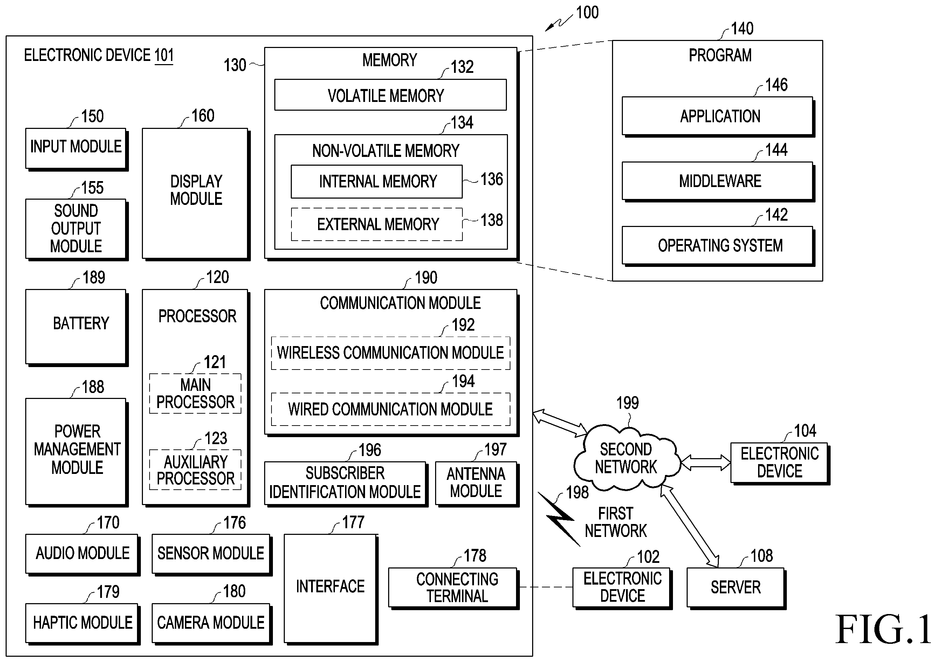

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device and the external electronic device via the server coupled with the second network. The external electronic devices each may be a device of the same or a different type from the electronic device. According to an embodiment, all or some of operations to be executed at the electronic device may be executed at one or more of the external electronic devices. For example, if the electronic device should perform a function or a service automatically, or in response to a request from a user or another device, the electronic device, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device. The electronic device may provide the outcome, with or without further processing of the outcome, as at least part of a reply to the request. To that end, a cloud computing, distributed computing, mobile edge computing (MEC), or client-server computing technology may be used, for example. The electronic device may provide ultra low-latency services using, e.g., distributed computing or mobile edge computing. In another embodiment, the external electronic device may include an Internet-of-things (IoT) device. The server may be an intelligent server using machine learning and/or a neural network. According to an embodiment, the external electronic device or the server may be included in the second network. The electronic device may be applied to intelligent services (e.g., smart home, smart city, smart car, or healthcare) based on 5G communication technology or IoT-related technology.

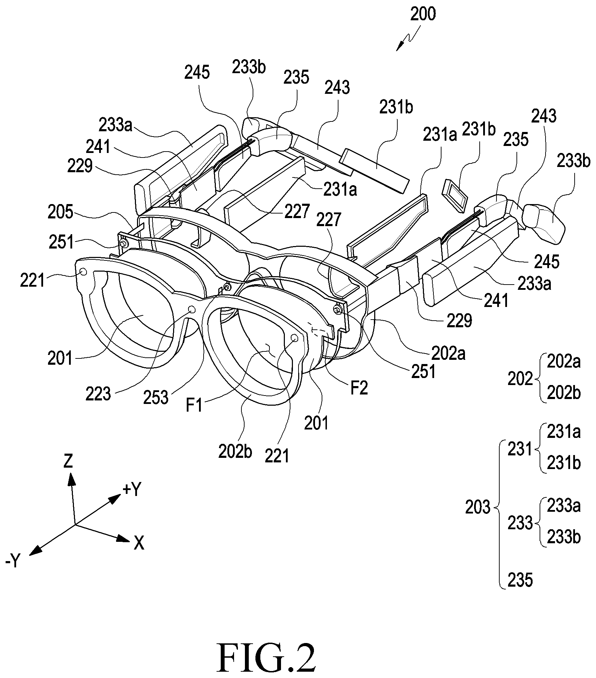

FIG. 2 is an exploded perspective view illustrating a wearable electronic device 200 (e.g., the electronic device 101 of FIG. 1) according to one of various embodiments of the disclosure.

Referring to FIG. 2, the wearable electronic device 200 may be an eyeglasses shaped electronic device, and the user may visually recognize her surrounding objects or environment while wearing the electronic device 200. The wearable electronic device 200 may obtain or recognize a visual image regarding an object or environment in the direction (e.g., -Y direction) in which the wearable electronic device 200 faces or the direction in which the user gazes, using the camera module 251 (e.g., the camera module 180 of FIG. 1) and may receive information regarding the object or environment from an external electronic device (e.g., the electronic device 102 or 104 or the server 108 of FIG. 1) through a network (e.g., the first network 198 or second network 199 of FIG. 1). In some embodiments, the wearable electronic device 200 may provide the received object-related or environment-related information, in the form of an audio or visual form, to the user. For example, the wearable electronic device 200 may provide the received object-related or environment-related information, in a visual form, to the user through the display members 201, using the display module (e.g., the display module 160 of FIG. 1). For example, the wearable electronic device 200 may implement augmented reality (AR) by implementing the object-related or environment-related information in a visual form and combining it with an actual image of the user's surrounding environment. As used in this description, the "state or position in which the electronic device or a designated component of the electronic device faces the user's face" may be mentioned in various manners and it should be noted that this presumes that the user is wearing the wearable electronic device 200.

According to various embodiments, the wearable electronic device 200 may include at least one display member 201, a lens frame 202, and a wearing member 203. A pair of display members 201 may be provided and disposed to correspond to the user's left and right eyes, respectively, with the wearable electronic device 200 worn on the user's body. In some embodiments, the wearable electronic device 200 may have a shape (e.g., goggles shape) including one display member 201 corresponding to the left eye and the right eye.

The display member 201 may be a component for providing the user with visual information. The display member 250 may include a module including, e.g., a lens, a display, and/or touch circuitry. The lens and the display may be formed to be transparent or semi-transparent. As another example, the display member 201 may include a window member that may be a semi-transparent glass or a member capable of adjusting its light transmittance depending on the concentration of coloring. As another example, the display member 250 may include a reflective lens or a lens including a waveguide. An image output from the light output device may form on each lens, providing the user with visual information. The display member 201 may have a first surface F1 facing in a direction (e.g., - Y direction) in which external light is incident and a second surface F2 facing in a direction (e.g., +Y direction) opposite to the first surface F1. In a state where the user wears the electronic device 200, the second surface F2 of the display member 201 may be disposed to face the user's left or right eye and at least partially transmits the light or image incident through the first surface F1 to the user's left eye or right eye.

The lens frame 202 may be a structure at least partially surrounding the edge of the display member 201 to fix at least a portion of the display members 201 and may be supported or positioned on the user's face while the user wears the wearable electronic device 200. For example, the lens frame 202 may position at least one of the display members 201 to correspond to the user's eye. **In** some embodiments, the lens frame 202 may serve as the rim of a normal eyeglass structure. **In** some embodiments, the lens frame 202 may at least partially include a material, e.g., metal, with good thermal conductivity. The thermally conductive material may include, e.g., a metal material, but is not limited thereto, and any material having good thermal conductivity may be used as a material for manufacturing the lens frame 202 even when it is not a metal material. The lens frame 202 may be a structure substantially exposed to the exterior of the wearable electronic device 200 and may be easily processed or shaped by including not only a metal material having thermal conductivity but also a polymer, such as polycarbonate. **In** some embodiments, the lens frame 202 may have a closed loop shape surrounding the display member 201.

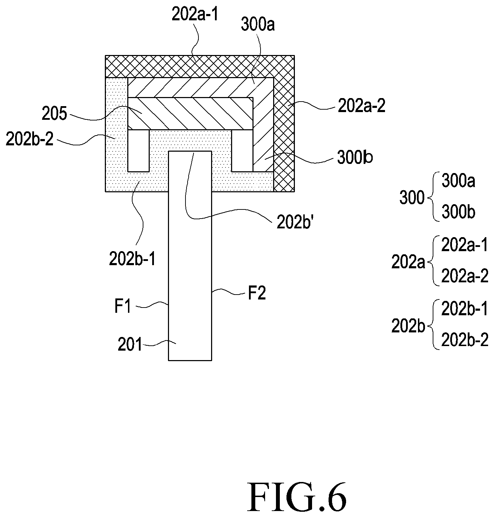

The lens frame 202 may be formed of a combination of at least two frames. For example, the lens frame 202 may include a first frame 202a and a second frame 202b. As seen in FIG. 2, the first frame 202a may form a frame structure of a portion facing the user's face when the user wears the wearable electronic device 200, and the second frame 202b may form a frame structure of a portion facing in the direction of the user's gaze when the user wears the wearable electronic device 200. However, the specific shapes of the first frame 202a and the second frame 202b and the coupling relationship between these structures may vary, for example as described below in detail with reference to FIG. 6.

The wearable electronic device 200 may include a camera module 251 (e.g., the camera module 180 and/or the sensor module 253 (e.g., the sensor module 176 of FIG. 1) of FIG. 1) disposed on the lens frame 202. The flexible printed circuit board 205 may electrically connect the camera module 251 and/or the sensor module 253 to the circuit board 241 received in the wearing member 203. The camera module 251 may obtain an image of a surrounding object or environment through a first optical hole 221 formed in the lens frame 202. The camera modules 251 and/or first optical holes 221 may be disposed on two opposite sides of the lens frame 202 (e.g., the second frame 202b), e.g., formed in two opposite ends of the lens frame 202 (e.g., the second frame 202b) with respect to the X direction. The processor (e.g., the processor 120 of FIG. 1) of the electronic device 200 may recognize the object or environment based on the image obtained through the camera module 251. **In** some embodiments, the wearable electronic device 200 (e.g., the processor 120 or the communication module 190 of FIG. 1) may transmit the image obtained through the camera module 251 to an external electronic device (e.g., the electronic device 102 or 104 or server 108 of FIG. 1) and request information regarding the image.

The flexible printed circuit board 205 may extend from the circuit board 241 through the hinge structure 229 to the inside of the lens frame 202 and may be disposed in at least a portion of the inside of the lens frame 202 around the display member 201. For example, the camera module 251 and/or the sensor module 253 may be disposed substantially in the lens frame 202 and may be positioned around the display member 201.

The sensor module 253 may include a proximity sensor and it may be electrically connected to the circuit board 241 through the flexible printed circuit board 205. The sensor module 253 may detect whether the user's body (e.g., finger) approaches the display member 201 or remains close to the display member 201 within a predetermined distance through the second optical hole 223 formed in the second frame 202b. The sensor module 253 and/or the second optical hole 223 may be disposed in the central portion of the lens frame 202, between the camera modules 251, e.g., in the X direction. **In** some embodiments, the exemplified configuration of the wearable electronic device 200 includes one sensor module 253 (e.g., a proximity sensor) and one second optical hole 223. However, the present invention is not limited thereto. Various numbers and/or positions may exist for the second optical hole 223 and sensor module 253 to more accurately detect the approach or proximity of the user's body.

If the approach of the user's body is detected through the sensor module 253 (e.g., a proximity sensor), the processor (e.g., the processor 120 of FIG. 1) may be configured to perform a designated function. In some embodiments, if approach of the user's body is detected, the processor 120 may store the image obtained through the camera module 251. For example, the processor 120 may execute various functions based on the signal detected through a proximity sensor (e.g., the sensor module 253) according to the operation mode of the wearable electronic device 200. In some embodiments, the sensor module 253 may include a gaze tracking sensor (not shown). For example, the wearable electronic device 200 may track the user's gaze by including a gaze tracking sensor and adjust the position and/or size of the image output through the display module (e.g., the display module 160 of FIG. 1) according to the user's gaze and provided to the user through the display member 201.

The camera module 251 may be replaced with the sensor module 253, or the sensor module 253 may be replaced with the camera module 251. Further, according to an embodiment, more camera modules 251 and/or sensor modules 253 than those of the embodiment shown in the drawings may be included.

The wearable electronic device 200 may include a pair of wearing members 203. The wearing members 203 each may extend from the lens frame 202 and, together with the lens frame 202, may be partially supported or positioned on the user's body (e.g., ears). In some embodiments, the wearing member 203 may be pivotably coupled to the lens frame 202 through a hinge structure 229. While the wearable electronic device 200 is not in use, the user may fold the wearing members 203 to the lens frame 202 for convenient carrying or storage. A portion of the hinge structure 229 may be mounted on the lens frame 202, and another portion may be received or mounted into the wearing member 203. A hinge cover 227 may be mounted on the lens frame 202 to conceal a portion of the hinge structure 229, and another portion of the hinge structure 229 may be received or hidden between the inner case 231 and the outer case 233 to be described below.

According to various embodiments, the wearable electronic device 200 may include various electric components positioned on the wearing member 203, e.g., the circuit board 241, the battery 243, the camera module 251, the display module (e.g., the display module 160 of FIG. 1), and/or the speaker module 245. Various electric components received in the wearing members 203 may be electrically connected through a circuit board (e.g., the circuit board 241, a flexible printed circuit board (e.g., the flexible printed circuit board 205), conductive cables or connectors). In some embodiments, at least one integrated circuit chip may be mounted on the circuit board 241. Circuit devices, such as the processor 120, communication module 190, power management module 188, or memory 130 of FIG. 1, may be provided in an integrated circuit chip 241a.

The wearing member 203 may include the inner case 231 and the outer case 233. The inner case 231 may be, e.g., a case configured to directly contact the user's body, and may be formed of a material having low thermal conductivity, e.g., a synthetic resin. The outer case 233 may include, e.g., a material (e.g., a metal) capable of at least partially transferring heat and may be coupled to the inner case 231 to face each other. In an embodiment, the circuit board 241 or the speaker module 245 may be received in a space separated from the battery 243 in the wearing member 203. In the illustrated embodiment, the inner case 231 may include a first case 231a including the circuit board 241 or the speaker module 245 and a second case 231b receiving the battery 243, and the outer case 233 may include a third case 233a coupled to face the first case 231a and a fourth case 233b coupled to face the second case 231b. For example, the first case 231a and the third case 233a may be coupled (hereinafter, 'first case portions 231a and 233a') to receive the circuit board 241 or the speaker module 245, and the second case 231b and the fourth case 233b may be coupled (hereinafter, 'second case portions 231b and 233b') to receive the battery 343.

The first case portions 231a and 233a may be rotatably coupled to the lens frame 202 through the hinge structure 229, and the second case portions 231b and 233b may be connected or mounted to the ends of the first case portions 231a and 233a through the connecting member 235. **In** some embodiments, a portion of the connecting member 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting member 235 may block heat transfer to the portion in contact with the user's body while dissipating or discharging heat through the portion not in contact with the user's body. **In** some embodiments, a portion of the connecting member 235 configured to come into contact with the user's body may be interpreted as a portion of the inner case 231, and a portion of the connecting member 235 that does not come into contact with the user's body may be interpreted as a portion of the outer case 233.

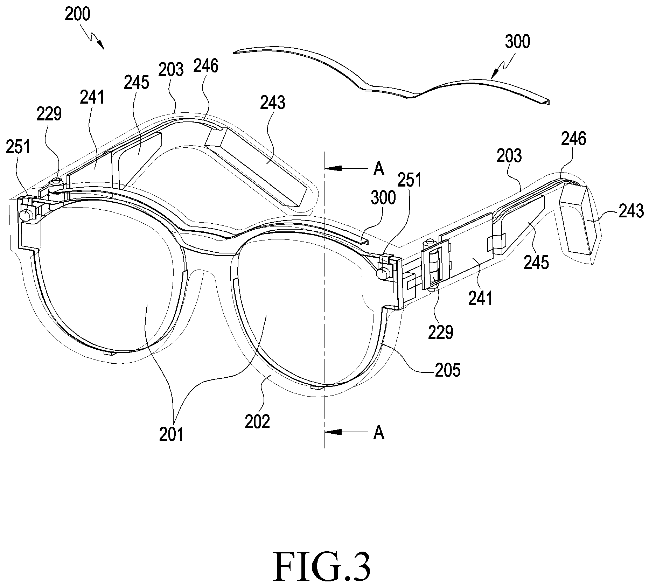

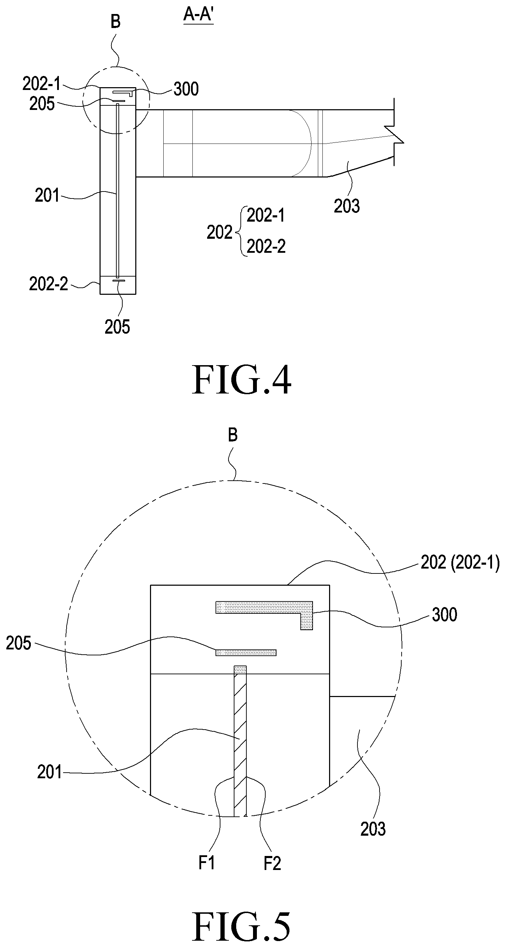

FIG. 3 is a perspective view illustrating an internal configuration of a display member and a wearing member of a wearable electronic device according to various embodiments of the disclosure. FIG. 4 is a cross-sectional view taken along direction A-A of FIG. 3. FIG. 5 is an enlarged cross-sectional view of portion B of FIG. 4. FIGS. 4 and FIG. 5 may schematically show a position of a reinforcing member 300 disposed in the wearable electronic device 200.

Referring to FIGS. 3 to 5, the wearable electronic device 200 includes a reinforcing member 300 disposed in the internal space of the lens frame and formed to have a higher rigidity than the lens frame.

The reinforcing member 300 may be a component provided to increase front surface rigidity of the wearable electronic device 200. As shown in FIGS. 3 and 4, when the wearable electronic device 200 opens the wearing members 203, the lens frame 202 may be disposed on the front surface of the wearable electronic device 200. Accordingly, the 'front surface' of the wearable electronic device 200 may mean the lens frame 202. As the reinforcing member 300 is disposed, the rigidity of the lens frame 202 may increase, so that warpage may be reduced as compared to other portions of the wearable electronic device 200 in which the reinforcing member 300 is not provided. According to various embodiments, the reinforcing member 300 may be disposed in a portion adjacent to the connecting structure of the lens frame 202 and the wearing member 203 among various portions of the lens frame 202. Here, the 'portion adjacent to the connecting structure of the lens frame 202 and the wearing member 203' may mean the upper structure 202-1 of the upper structure 202-1 and the lower structure 202-2 of the lens frame 202. According to an embodiment, the reinforcing member 300 may be disposed in a portion adjacent to the portion in which the camera module 251 and/or the sensor module 253 is disposed in the lens frame 202. As the reinforcing member 300 is disposed in the portion adjacent to the portion in which the camera module 251 and/or the sensor module 253 is disposed, the rigidity of the lens frame 202 of that portion may be increased, and accordingly, the warpage of the lens frame 202 in the portion where the camera module 251 and/or the sensor module 253 is disposed may be reduced, increasing the accuracy of recognition of the space or object using the camera module 251 and/or the sensor module 253. In some embodiments, as shown in FIG. 3, the reinforcing member 300 may be formed to extend along the display members 201 disposed on the left eye and right eye to at least partially surround the left and right display members 201, respectively. Further, in some embodiments, the reinforcing member 300 may have a left/right symmetrical structure with respect to the central portion of the reinforcing member 300.

Referring to FIGS. 4 and 5, the reinforcing member 300 may have a plate shape with a bent portion as viewed in cross-sectional view. For example, the reinforcing member 300 may be formed to have an inverted-'L' or 'L' shape cross section. The reinforcing member 300 may include a portion (first portion) extending along the length direction (e.g., the +y or -y-axis direction of FIG. 2) and a portion (second portion) extending along the height direction (e.g., z direction of FIG. 2) of the electronic device 200. The length direction may be the length direction of the wearing members 203 when the wearing members 203 of the wearable electronic device 200 are opened, and the height direction may be the height direction of the display members 201 of the wearable electronic device.

The reinforcing member 300 may be formed in a position adjacent to the lens frame 202. At least a portion of the reinforcing member 300 may be disposed to overlap the flexible printed circuit board 205 disposed on the lens frame 202.

The shape and dispositional relationship of the reinforcing member 300 are described in more detail below with reference to FIG. 6.

FIG. 6 is a view illustrating a rigidity securing structure of a wearable electronic device according to various embodiments of the disclosure.

FIG. 6 depicts a conceptual view for a dispositional relationship between the lens frame 202 of the wearable electronic device 200, the flexible printed circuit board 205 and reinforcing member 300 disposed in the lens frame 202.

The lens frame 202 may include a first frame 202a and a second frame 202b surrounding at least a portion of the display members 201 and coupled to the first frame 202a to form an internal space of the electronic device. According to an embodiment, the first frame 202a may be disposed to face the user's face. The second frame 202b may include a second frame 202b coupled to the first frame 202a to face each other. For example, in a state in which the user wears the wearable electronic device 200, the first frame 202a may be disposed towards the user's face, and the second frame 202b may be disposed in a direction opposite to the first frame 202a, e.g., in the direction where the user views. In an embodiment, the display members 201 may be disposed on the lens frame 202 with the first surface F1 and the second surface F2 exposed to the external environment. According to an embodiment, at least a portion of the edge of the display members 201 may be positioned on the seating portion 202b' of the second frame 202b. The specific shape and connecting structure of the first frame 202a and the second frame 202b may be varied depending on embodiments. Although not shown in the drawings, at least a portion of the edge of the display members 201 may be positioned between the first frame 202a and the second frame 202b. For example, the first frame 202a and the second frame 202b are coupled to face each other, fastening or fixing the edge of at least one of the display members 201.

The first frame 202a may include a 1-1th frame 202a-1 forming the outermost frame of the wearable electronic device, which is farthest from the display members 201 and a 1-2th frame 202a-2 bent from the 1-1th frame 202a-1 to face the user's face when worn by the user. The 1-2th frame 202a-2 may be bent substantially perpendicular to the 1-1th frame 202a-1, but is not limited thereto. The 1-1th frame 202a-1 and the 1-2th frame 202a-2 may be integrally formed by including a polymer, such as polycarbonate, which is easy to process and shape.

The second frame 202b may include a 2-1th frame 202b-1 having a seating portion 202b' where the display members 201 are drawn in to be seated and a 2-2th frame 202b-2 bent from the 2-1th frame 202b-1 to face the user's gaze direction when worn by the user. The 2-2th frame 202b-2 may be bent substantially perpendicular to the 2-1th frame 202b-1, but is not limited thereto. The 2-1th frame 202b-1 and the 2-2th frame 202b-2 may be integrally formed by including a polymer, such as polycarbonate, which is easy to process and shape. The respective ends of the first frame 202a and the second frame 202b may be coupled to each other to form the overall appearance of the wearable electronic device.

A flexible printed circuit board 205 may be disposed in the internal space between the first frame 202a and the second frame 202b. The flexible printed circuit board 205 may be a component for electrical connection between at least one electronic component disposed in the lens frame 202 and an electronic component disposed in the wearing member 203 or in another position in the lens frame 202. For example, as described above in connection with FIG. 2, the flexible printed circuit board 205 may be a component to electrically connect the camera module 251 and/or the sensor module 253 to the circuit board 241 received in the wearing member 203. In some embodiments, the flexible printed circuit board 205 may be disposed on or over the second frame 202b. In this case, at least a portion of the flexible printed circuit board 205 may be supported from the second frame 202b. In some embodiments, although not shown in the drawings, at least one electronic component may be mounted on the flexible printed circuit board 205.

The wearable electronic device 200 may include a reinforcing member 300 formed to have higher rigidity than the lens frame 202 and including a first portion 300a disposed between the flexible printed circuit board 205 and the first frame 202a and a second portion 300b bent from the first portion 300a at a predetermined angle. In some embodiments, the reinforcing member 300 may include carbon fiber reinforced plastics (CFRP). For example, when the rigidity of the lens frame 202 including polycarbonate is 2 GPa, the rigidity of the reinforcing member 300 may be measured as 42 GPa to 76 GPa. For example, if the wearable electronic device 200 in which the specific gravity of the display members 201 is 2.4, and the specific gravity of the lens frame 202 is 1.2 adds a reinforcing member 300 whose specific gravity is 1.2 to 1.55, it is possible to provide a wearable electronic device 200 having higher rigidity than the lens frame 202 including only polycarbonate, with an increase in weight minimized.

The first portion 300a of the reinforcing member 300 may be formed to at least partially face the 1-1th frame 202a-1, and the second portion 300b of the reinforcing member 300 may be formed to at least partially face the 1-2th frame 202a-2. As shown in FIG. 6, the first portion 300a of the reinforcing member 300, along with the 1-1th frame 202a-1, may extend toward the wearing member 203 of the wearable electronic device 200, and the second portion 300b of the reinforcing member 300 may extend toward the display members 201 while contacting the 1-2th frame 202a-2. As the first portion 300a of the reinforcing member 300 contacts the 1-1th frame 202a-1, and the second portion 300b contacts the 1-2th frame 202a-2, the rigidity of the lens frame 202 may be enhanced. According to an embodiment, the reinforcing member 300 may be shaped to be attached to the first frame 202a.

Further, as shown in the FIG. 6, the second portion 300b, along with the 1-2th frame 202a-2, may extend toward the display members 201, and its end may contact a portion of the 2-1th frame 202b-1. Accordingly, an end of the second portion 300b may contact the first frame 202a, and the other end may contact the second frame 202b to be supported from the reinforcing member of the lens frame 202, further enhancing the rigidity of the lens frame 202.

As shown in FIG. 6, the reinforcing member 300 may directly contact the flexible printed circuit board 205, but is not necessarily limited thereto. As described above in connection with FIG. 5, the reinforcing member 300 may be spaced apart from the flexible printed circuit board by a predetermined gap. According to an embodiment, when at least one electronic component is disposed on the flexible printed circuit board, at least a portion of the reinforcing member 300 may be stacked with the at least one electronic component. For example, the electronic component that may be disposed on the flexible printed circuit board may correspond to at least one of the camera module 251, the sensor module 253, or a receiver.

In relation to a method for manufacturing a rigidity securing structure shown in FIG. 6, according to an embodiment, the second frame 202b coupled with the display members 201 may be attached to the first frame 202a, with the first frame 202a and the reinforcing member 300 attached to each other.

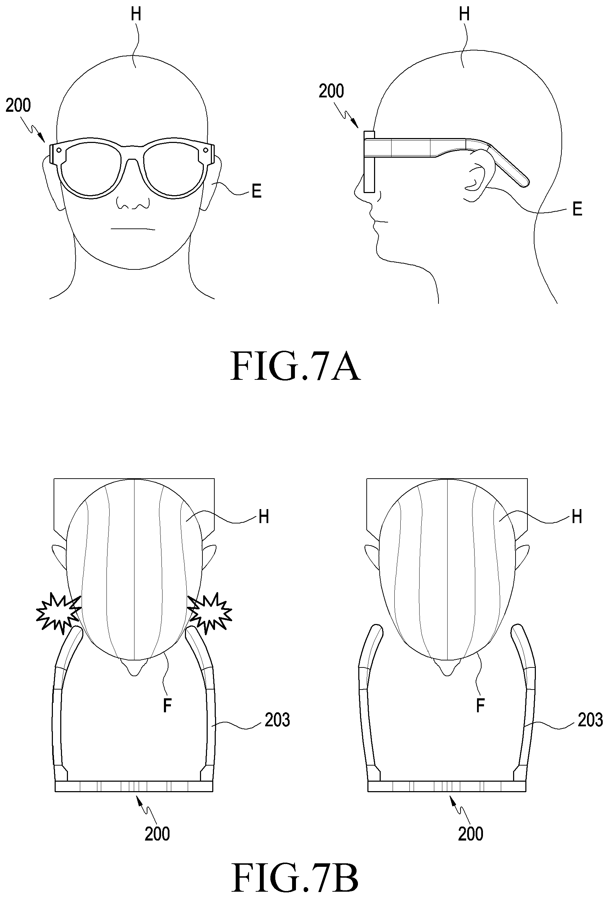

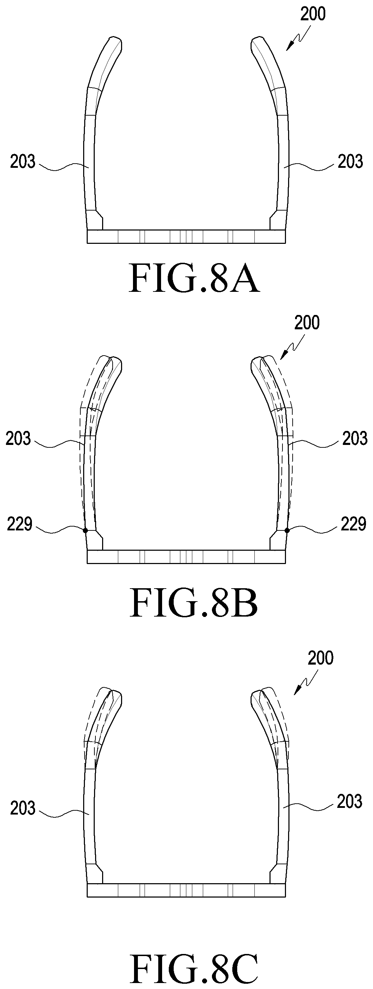

FIG. 7A is a view illustrating an example in which a user wears a wearable electronic device. FIG. 7B is a view illustrating an embodiment in which a wearing member of a wearable electronic device hits a user's face portion and an embodiment in which the wearing member of the wearable electronic device does not hit the user's face portion. FIGS. 8A to 8C are views illustrating various embodiments of tension generated in a wearing member of a wearable electronic device. FIG. 8A is a view illustrating a wearing member before a user wears a wearable electronic device. FIG. 8B is a view illustrating an example in which wearing members are opened in directions opposite to the direction toward a user's head with respect to a hinge structure when the user wears a wearable electronic device. FIG. 8C is a view illustrating an example in which flexible portions of wearing members are opened in directions opposite to the direction toward a user's head when the user wears a wearable electronic device.

Referring to FIGS. 7a and 7b, when the user wears the wearable electronic device 200 on the head H, the lens frame 202 may be positioned on the user's face F, and the wearing members 203 may be hung on the user's ears E. In the rigidity-reinforced wearable electronic device in the embodiment described above in connection with FIG. 6, the warpage of the lens frame 202 may be reduced, so that a portion of the wearing members 203 may contact the face F when the user wears the wearable electronic device 200, causing inconvenience in use. Accordingly, a method for enhancing the wearing comfort of the wearable electronic device 200 may be provided corresponding to the enhanced rigidity of the lens frame 202. For example, as in the embodiment shown in FIGS. 8A to 8C, the wearable electronic device 200 may apply a tension structure to the hinge structure 229 (refer to FIG. 8(b)) and apply a flexible structure (or a flexible portion) to the wearing member 203 (refer to FIG. 8(c)), enhancing the wearing comfort of the wearable electronic device 200.

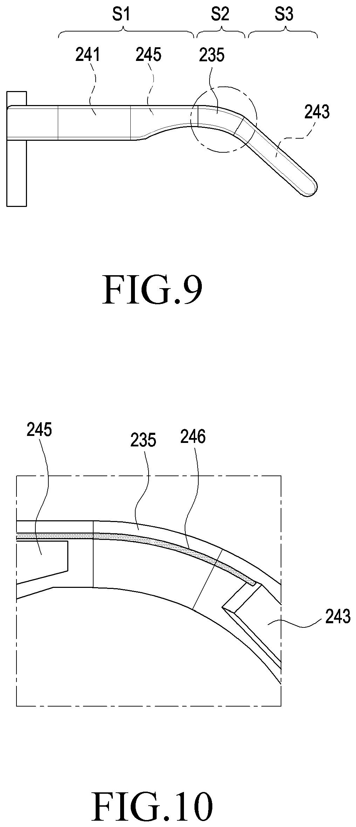

FIG. 9 is a view illustrating a rigid portion and a flexible portion of a wearing member according to various embodiments of the disclosure. FIG. 10 is an enlarged view of a flexible portion of a wearing member according to various embodiments of the disclosure.

There may be provided a method for reducing the concentration of the weight of the wearable electronic device 200 to the lens frame 202 or on the user's face. Referring back to FIG. 2 together with FIGS. 9 and 10, the positions of the electric components may be varied in the wearing members 203 to evenly distribute the weight of the wearable electronic device 200 with the wearable electronic device 200 worn. For example, in the wearing member 203, the circuit board 241 may be disposed adjacent to the lens frame 202, and the electric component (e.g., the battery 243) which is heavier than the circuit board 241 may be disposed farther from the lens frame 202 than the circuit board 241. Accordingly, it is possible to mitigate the concentration of the weight of the wearable electronic device 200 to the lens frame 202 or on the user's face. The speaker module 245 may be disposed in the wearing member 203 between the circuit board 241 and the battery 243, and may be positioned close to the user's ear while the user wears the wearable electronic device 200.

The wearing member 203 may include a rigid portion having relatively low bendability and a flexible portion having relatively high bendability. **In** some embodiments, the wearing member 203 may be formed by combining at least one rigid portion and at least one flexible portion. For example, the wearing member 203 may include a first rigid portion S1 formed adjacent to the lens frame 202, a flexible portion S2 provided to reduce pressure on the side of the face when worn by the user, and a second rigid portion S3 positioned at the end of the wearing member 203. Here, the first rigid portion S1 may correspond to a portion in which the circuit board 241 and the speaker module 245 are disposed. The second rigid portion S3 may correspond to a portion in which the battery 243 is disposed. The first rigid portion S1 and the second rigid portion S3 may be relatively less bendable because their appearance is formed by the inner/outer cases 231 and 233 as described above in FIG. 2. The flexible portion S2 is a portion where the connecting member 235 is disposed, and may be formed of an elastic material, such as silicone, polyurethane, or rubber, and be provided between the first rigid portion S1 and the second rigid portion S3. A wire 246 for electrically connecting the circuit board 241 disposed on the first rigid portion S1 and the battery 243 disposed on the second rigid portion S3 may be provided inside the connecting member 235. The electronic components mounted in the internal space of the cases 231 and 233 of the first rigid portion S1 and the second rigid portion S3 may be electrically connected by the wire 246, while the cases 231 and 233 of the first rigid portion S1 and the second rigid portion S3 each may be bonded and connected to the connecting member 235 of the flexible portion S2. It is possible to provide a wearable electronic device 200 that is warpable as in the embodiment shown in FIG. 8(c) by using a combined structure of the rigid portion and the flexible portion of the wearing member 203.

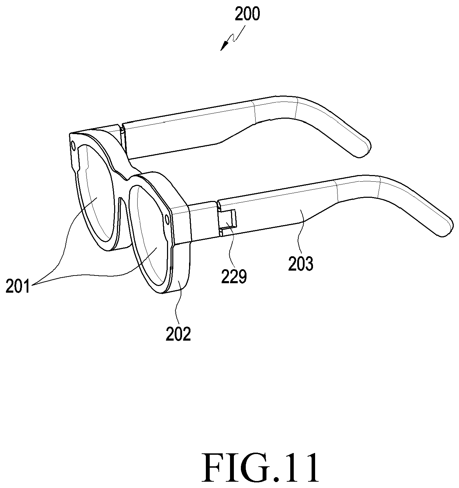

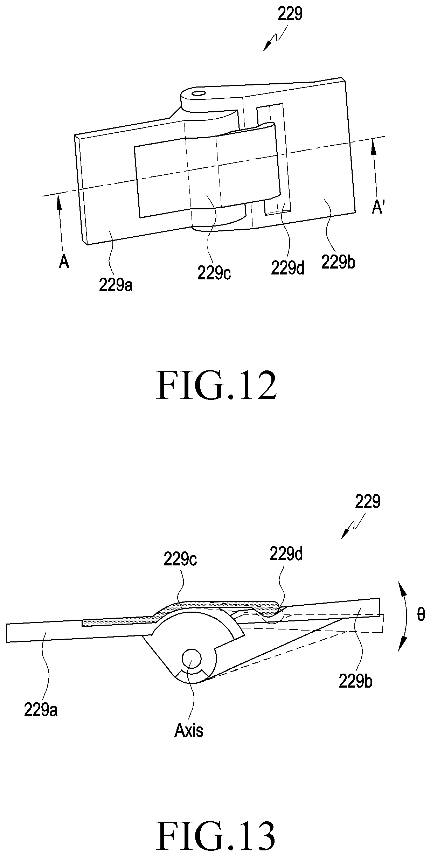

FIG. 11 is a perspective view illustrating a wearable electronic device including a hinge structure according to various embodiments of the disclosure. FIG. 12 is a perspective view illustrating a hinge structure according to various embodiments of the disclosure. FIG. 13 is a cross-sectional view illustrating a hinge structure according to various embodiments of the disclosure. FIG. 13 may show a cross-section taken along direction A-A' of the hinge structure of FIG. 12.

The wearable electronic device 200 may further include a hinge structure 229 disposed between the lens frame 202 and the wearing member 203 and provided to fold the wearing member 203 about the lens frame 202. As described above in connection with FIG. 2, the wearing member 203 may be pivotably coupled to the lens frame 202 through a hinge structure 229. While the wearable electronic device 200 is not in use, the user may fold the wearing members 203 to the lens frame 202 for convenient carrying or storage.

The hinge structure 229 may be provided to fold the wearing member 203 about the lens frame 202 and may also be formed to rotate about the lens frame 202 in the direction opposite to the folding direction.

Referring to FIGS. 12 and 13, the hinge structure 229 may include a first hinge portion 229a connected with the lens frame 202 and a second hinge portion 229b axis-coupled with the first hinge portion 229a and connected with the wearing member 203. The hinge structure 229 may further include a restoring member 292c having a portion connected to the first hinge portion 229a and another portion extending towards the second hinge portion 229b. The restoring member 229c may be formed of, e.g., a leaf spring, and may be formed to cover at least a portion of an outer surface of the first hinge portion 229a and an outer surface of the second hinge portion 229b. A portion of the restoring member 229c may be received and fixed in a recess formed in the outer surface of the first hinge portion 229a, and another portion may be received in a recess 229d formed in the outer surface of the second hinge portion 229b.

In an example of rotating about the lens frame 202 in the direction opposite to the folding direction of the wearing member 203, in the initial state where the first hinge portion 229a and the second hinge portion 229b are parallel to each other, the second hinge portion 229b and the restoring member 229c may be rotated by a predetermined angle (e.g., 5°) and be then restored to the initial state due to the elastic restoring force of the restoring member 229c. In other words, there may be a structure (tension structure) where the wearing member 203 is rotated about the lens frame 202 by a predetermined angle in the direction opposite to the folding direction, but is restored to the original position by the restoring member 229c.

It is possible to provide a wearable electronic device 200 that is warpable as in the embodiment shown in FIG. 8(b) by using such a hinge structure 229.

It is possible to secure high rigidity of the frame for increasing the accuracy of sensing of the sensor positioned on the front surface of the wearable electronic device 200. Furthermore, it is possible to minimize the concentration of weight on the front portion of the wearable electronic device 200 by applying a lightweight material (e.g., carbon fiber reinforced plastic) as a component for securing high rigidity.

In some embodiments, to minimize the issue that the wearing member hits the user's face during wearing due to securing the rigidity of the front surface of the wearable electronic device 200, the hinge structure 229 is provided for rotating the wearing member about the lens frame in the direction opposite to the folding direction by predetermined tension, thereby enhancing wearing comfort.

In some embodiments, to minimize the issue that the wearing member hits the user's face during wearing due to securing the rigidity of the front surface of the wearable electronic device 200, wearing members 203 having a flexible portion between rigid portions are applied, so that the wearing members are maximally opened during wearing and, after wearing, tightly contact the user's face, thereby enhancing wearing comfort.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

It is apparent to one of ordinary skill in the art that the electronic devices according to various embodiments of the present invention as described above are not limited to the above-described embodiments and those shown in the drawings, and various changes, modifications, or alterations may be made thereto without departing from the scope of the present invention.

## Claims

1. A wearable electronic device (101, 200), comprising:
a display member (201) configured to provide visual information to a user;
a lens frame (202) comprising:
a first frame (202a), and
a second frame (202b),
wherein the first frame and the second frame surrounds at least a portion of the display member, the second frame being coupled to the first frame to form an internal space of the electronic device;
a wearing member (203) coupled to at least one side of the lens frame;
a flexible printed circuit (205) board disposed within the internal space; **characterised in that** the wearable electronic device comprises
a reinforcing member (300) configured to have a higher rigidity than the lens frame, the reinforcing member comprising:
a first portion (300a) disposed between the flexible printed circuit board and the lens frame, and
a second portion (300b) extending from the first portion by a predetermined angle to form a bend.

2. The wearable electronic device (101, 200) of claim 1,
wherein the first frame (202a) is configured to face a first direction corresponding to the user's face when the wearable electronic device is worn by the user, and
wherein the second frame (202b) is configured to (i) face a second direction opposite to the first direction when the wearable electronic device is worn by the user and (ii) be coupled to the first frame such that the second frame is disposed in the second direction with respect to the first frame.

3. The wearable electronic device (101, 200) of claim 2, wherein the first frame (202a) comprises a 1-1th frame (202a-1) forming an outermost frame of the wearable electronic device, which is farthest from the display member (201) in the second direction, and a 1-2th frame (202a-2) extending from the 1-1th frame to be bent toward the first direction.

4. The wearable electronic device (101, 200) of claim 3, wherein the first portion (300a) of the reinforcing member (300) is arranged to at least partially face the 1-1th frame (202a-1) in a third direction, and the second portion (300b) of the reinforcing member is arranged to at least partially face the 1-2th frame (202a-2) in the first direction.

5. The wearable electronic device (101, 200) of claim 2, wherein the second frame (202b) comprises a 2-1th frame (202b-1) including a seating portion configured to seat the display member (201) and a 2-2th frame (202b-2) extending from the 2-1th frame to be bent toward the second direction.

6. The wearable electronic device (101, 200) of claim 1,
wherein the flexible printed circuit board (205) is disposed on the second frame (202b), and
wherein the first portion (300a) of the reinforcing member (300) is disposed between the flexible printed circuit board and the first frame (202a).

7. The wearable electronic device (101, 200) of claim 1, wherein at least one component electrically connected with the flexible printed circuit board (205) is disposed within the internal space of the electronic device.

8. The wearable electronic device (101, 200) of claim 1, wherein the wearing member (203) comprises:
a first rigid portion (S1) formed adjacent to the lens frame (202);
a flexible portion (S2) configured to reduce pressure on a side of the user's face when worn by the user; and
a second rigid portion (S3) positioned at an end of the wearing member.

9. The wearable electronic device (101, 200) of claim 8, wherein the first rigid portion (S1), the flexible portion (S2), and the second rigid portion (S3) are sequentially disposed in order of being adjacent to the lens frame (202).

10. The wearable electronic device (101, 200) of claim 8, wherein the flexible portion (S2) is disposed in a portion corresponding to the user's ear when the wearable electronic device is worn by the user.

11. The wearable electronic device (101, 200) of claim 1, further comprising a hinge structure (229) rotatably connecting the lens frame (202) to the wearing member (203).

12. The wearable electronic device (101, 200) of claim 11, wherein the hinge structure (229) further includes a restoring member (292c) positioned between the lens frame (202) and the wearing member (203), the hinge structure being configured to prevent the wearing member from being rotated about the lens frame by a second predetermined angle or more.

13. The wearable electronic device (101, 200) of claim 12, wherein the restoring member (292c) is disposed on an outer surface of the wearing member (203).

14. The wearable electronic device (101, 200) of claim 1, wherein two sensor modules (176, 251, 253) are disposed in symmetrical positions of the lens frame (202) corresponding to the left eye and the right eye of the user.

15. The wearable electronic device (101, 200) of claim 1, wherein the reinforcing member (300) has an L-shaped cross section and includes carbon fiber reinforced plastics, CFRP.

## Patentansprüche

1. Tragbare elektronische Vorrichtung (101, 200), umfassend:
ein Anzeigeelement (201), das dazu konfiguriert ist, einem Benutzer visuelle Informationen bereitzustellen;
einen Linsenrahmen (202), umfassend:
einen ersten Rahmen (202a) und
einen zweiten Rahmen (202b),
wobei der erste Rahmen und der zweite Rahmen mindestens einen Abschnitt des Anzeigeelements umgeben, wobei der zweite Rahmen an den ersten Rahmen gekoppelt ist, um einen Innenraum der elektronischen Vorrichtung zu bilden;
ein Tragelement (203), das an mindestens eine Seite des Linsenrahmens gekoppelt ist;
eine flexible Leiterplatte (205), die innerhalb des Innenraums angeordnet ist;
**dadurch gekennzeichnet, dass** die tragbare elektronische Vorrichtung ein Verstärkungselement (300) umfasst, das dazu konfiguriert ist, eine höhere Steifigkeit als der Linsenrahmen aufzuweisen, wobei das Verstärkungselement umfasst:
einen ersten Abschnitt (300a), der zwischen der flexiblen Leiterplatte und dem Linsenrahmen angeordnet ist, und
einen zweiten Abschnitt (300b), der sich von dem ersten Abschnitt um einen vorbestimmten Winkel erstreckt, um eine Biegung zu bilden.

2. Tragbare elektronische Vorrichtung (101, 200) nach Anspruch 1,
wobei der erste Rahmen (202a) dazu konfiguriert ist, in eine erste Richtung zu weisen, die dem Gesicht des Benutzers entspricht, wenn die tragbare elektronische Vorrichtung von dem Benutzer getragen wird, und
wobei der zweite Rahmen (202b) dazu konfiguriert ist, (i) in eine zweite Richtung entgegen der ersten Richtung zu weisen, wenn die tragbare elektronische Vorrichtung von dem Benutzer getragen wird, und (ii) an den ersten Rahmen gekoppelt zu sein, sodass der zweite Rahmen in Bezug auf den ersten Rahmen in der zweiten Richtung angeordnet ist.

3. Tragbare elektronische Vorrichtung (101, 200) nach Anspruch 2, wobei der erste Rahmen (202a) einen 1-1ten Rahmen (202a-1), der einen äußersten Rahmen der tragbaren elektronischen Vorrichtung bildet, der in der zweiten Richtung am weitesten von dem Anzeigeelement (201) entfernt ist, und einen 1-2ten Rahmen (202a-2), der sich von dem 1-1ten Rahmen erstreckt, um hin zu der ersten Richtung gebogen zu werden, umfasst.

4. Tragbare elektronische Vorrichtung (101, 200) nach Anspruch 3, wobei der erste Abschnitt (300a) des Verstärkungselements (300) arrangiert ist, um mindestens teilweise zu dem 1-1ten Rahmen (202a-1) in einer dritten Richtung zu weisen, und der zweite Abschnitt (300b) des Verstärkungselements arrangiert ist, um mindestens teilweise zu dem 1-2ten Rahmen (202a-2) in der ersten Richtung zu weisen.

5. Tragbare elektronische Vorrichtung (101, 200) nach Anspruch 2, wobei der zweite Rahmen (202b) einen 2-1ten Rahmen (202b-1), der einen Sitzabschnitt beinhaltet, der dazu konfiguriert ist, das Anzeigeelement (201) aufzunehmen, und einen 2-2ten Rahmen (202b-2), der sich von dem 2-1ten Rahmen erstreckt, um hin zu der zweiten Richtung gebogen zu werden, umfasst.

6. Tragbare elektronische Vorrichtung (101, 200) nach Anspruch 1,
wobei die flexible Leiterplatte (205) auf dem zweiten Rahmen (202b) angeordnet ist und
wobei der erste Abschnitt (300a) des Verstärkungselements (300) zwischen der flexiblen Leiterplatte und dem ersten Rahmen (202a) angeordnet ist.

7. Tragbare elektronische Vorrichtung (101, 200) nach Anspruch 1, wobei mindestens eine Komponente, die elektrisch mit der flexiblen Leiterplatte (205) verbunden ist, innerhalb des Innenraums der elektronischen Vorrichtung angeordnet ist.

8. Tragbare elektronische Vorrichtung (101, 200) nach Anspruch 1, wobei das Tragelement (203) umfasst:
einen ersten starren Abschnitt (S1), der benachbart zu dem Linsenrahmen (202) gebildet ist;
einen flexiblen Abschnitt (S2), der dazu konfiguriert ist, Druck auf einer Seite des Gesichts des Benutzers zu reduzieren, wenn von dem Benutzer getragen; und
einen zweiten starren Abschnitt (S3), der an einem Ende des Tragelements positioniert ist.

9. Tragbare elektronische Vorrichtung (101, 200) nach Anspruch 8, wobei der erste starre Abschnitt (S1), der flexible Abschnitt (S2) und der zweite starre Abschnitt (S3) sequenziell angeordnet sind, um benachbart zu dem Linsenrahmen (202) zu sein.

10. Tragbare elektronische Vorrichtung (101, 200) nach Anspruch 8, wobei der flexible Abschnitt (S2) in einem Abschnitt angeordnet ist, der dem Ohr des Benutzers entspricht, wenn die tragbare elektronische Vorrichtung von dem Benutzer getragen wird.

11. Tragbare elektronische Vorrichtung (101, 200) nach Anspruch 1, ferner umfassend eine Gelenkstruktur (229), die den Linsenrahmen (202) drehbar mit dem Tragelement (203) verbindet.

12. Tragbare elektronische Vorrichtung (101, 200) nach Anspruch 11, wobei die Gelenkstruktur (229) ferner ein Rückstellelement (292c) beinhaltet, das zwischen dem Linsenrahmen (202) und dem Tragelement (203) positioniert ist, wobei die Gelenkstruktur dazu konfiguriert ist, zu verhindern, dass das Tragelement um den Linsenrahmen um einen zweiten vorbestimmten Winkel oder mehr gedreht wird.

13. Tragbare elektronische Vorrichtung (101, 200) nach Anspruch 12, wobei das Rückstellelement (292c) auf einer Außenfläche des Tragelements (203) angeordnet ist.

14. Tragbare elektronische Vorrichtung (101, 200) nach Anspruch 1, wobei zwei Sensormodule (176, 251, 253) in symmetrischen Positionen des Linsenrahmens (202) angeordnet sind, die dem linken Auge und dem rechten Auge des Benutzers entsprechen.

15. Tragbare elektronische Vorrichtung (101, 200) nach Anspruch 1, wobei das Verstärkungselement (300) einen L-förmigen Querschnitt aufweist und kohlenstofffaserverstärkte Kunststoffe, CFK, beinhaltet.

## Revendications

1. Dispositif électronique pouvant être porté (101, 200) comprenant :
un élément d'affichage (201) conçu pour fournir des informations visuelles à un utilisateur ;
un cadre de lentille (202) comprenant :
un premier cadre (202a), et
un second cadre (202b),
ledit premier cadre et ledit second cadre entourant au moins une partie de l'élément d'affichage, ledit second cadre étant couplé au premier cadre pour former un espace interne du dispositif électronique ;
un élément de port (203) couplé à au moins un côté du cadre de lentille ;
une carte de circuit imprimé souple (205) disposée à l'intérieur de l'espace interne ;
**caractérisé en ce que** le dispositif électronique pouvant être porté comprend un élément de renforcement (300) conçu pour posséder une rigidité plus élevée que le cadre de lentille, l'élément de renforcement comprenant :
une première partie (300a) disposée entre la carte de circuit imprimé souple et le cadre de lentille, et
une seconde partie (300b) s'étendant à partir de la première partie selon un angle prédéfini pour former un coude.

2. Dispositif électronique pouvant être porté (101, 200) de la revendication 1,
ledit premier cadre (202a) étant conçu pour faire face à une première direction correspondant au visage de l'utilisateur lorsque le dispositif électronique pouvant être porté est porté par l'utilisateur, et
ledit second cadre (202b) étant conçu pour (i) faire face à une deuxième direction opposée à la première direction lorsque le dispositif électronique pouvant être porté est porté par l'utilisateur et (ii) être couplé au premier cadre de sorte que le second cadre est disposé dans la deuxième direction par rapport au premier cadre.

3. Dispositif électronique pouvant être porté (101, 200) de la revendication 2, ledit premier cadre (202a) comprenant un 1-1er cadre (202a-1) formant un cadre le plus extérieur du dispositif électronique pouvant être porté, qui est le plus éloigné de l'élément d'affichage (201) dans la deuxième direction, et un 1-2e cadre (202a-2) s'étendant à partir du 1-1er cadre pour être plié vers la première direction.

4. Dispositif électronique pouvant être porté (101, 200) de la revendication 3, ladite première partie (300a) de l'élément de renforcement (300) étant agencée pour faire au moins partiellement face au 1-1er cadre (202a-1) dans une troisième direction, et ladite seconde partie (300b) de l'élément de renforcement étant agencée pour faire au moins partiellement face au 1-2e cadre (202a-2) dans la première direction.

5. Dispositif électronique pouvant être porté (101, 200) de la revendication 2, ledit second cadre (202b) comprenant un 2-1er cadre (202b-1) comprenant une partie d'assise conçue pour asseoir l'élément d'affichage (201) et un 2-2e cadre (202b-2) s'étendant à partir du 2-1er cadre pour être plié vers la deuxième direction.

6. Dispositif électronique pouvant être porté (101, 200) de la revendication 1,
ladite carte de circuit imprimé souple (205) étant disposée sur le second cadre (202b), et
ladite première partie (300a) de l'élément de renforcement (300) étant disposée entre la carte de circuit imprimé souple et le premier cadre (202a).

7. Dispositif électronique pouvant être porté (101, 200) de la revendication 1, au moins un composant raccordé électriquement à la carte de circuit imprimé souple (205) étant disposé dans l'espace interne du dispositif électronique.

8. Dispositif électronique pouvant être porté (101, 200) de la revendication 1, ledit élément de port (203) comprenant :
une première partie rigide (S1) formée adjacente au cadre de lentille (202) ;
une partie souple (S2) conçue pour réduire la pression sur un côté du visage de l'utilisateur lorsqu'elle est portée par l'utilisateur ; et
une seconde partie rigide (S3) positionnée au niveau d'une extrémité de l'élément de port.

9. Dispositif électronique pouvant être porté (101, 200) de la revendication 8, ladite première partie rigide (S1), ladite partie souple (S2) et ladite seconde partie rigide (S3) étant disposées séquentiellement dans l'ordre d'être adjacentes au cadre de lentille (202).

10. Dispositif électronique pouvant être porté (101, 200) de la revendication 8, ladite partie souple (S2) étant disposée dans une partie correspondant à l'oreille de l'utilisateur lorsque le dispositif électronique pouvant être porté est porté par l'utilisateur.

11. Dispositif électronique pouvant être porté (101, 200) de la revendication 1, comprenant en outre une structure de charnière (229) raccordant de manière rotative le cadre de lentille (202) à l'élément de port (203).

12. Dispositif électronique pouvant être porté (101, 200) de la revendication 11, ladite structure de charnière (229) comprenant en outre un élément de restauration (292c) positionné entre le cadre de lentille (202) et l'élément de port (203), la structure de charnière étant conçue pour empêcher l'élément de port d'être tourné autour du cadre de lentille d'un second angle prédéfini ou plus.

13. Dispositif électronique pouvant être porté (101, 200) de la revendication 12, ledit élément de restauration (292c) étant disposé sur une surface externe de l'élément de port (203).

14. Dispositif électronique pouvant être porté (101, 200) de la revendication 1, deux modules de capteur (176, 251, 253) étant disposés dans des positions symétriques du cadre de lentille (202) correspondant à l'œil gauche et à l'œil droit de l'utilisateur.

15. Dispositif électronique pouvant être porté (101, 200) de la revendication 1, ledit élément de renforcement (300) possédant une section transversale en forme de L et comprenant des plastiques renforcés de fibres de carbone, CFRP.
